# FASCICULE DE BREVET EUROPEEN

(11) **EP 1 773 161 B1**
(45) Date de publication et mention de la délivrance du brevet: **23.04.2008**
(21) Numéro de dépôt: 05783714.8
(22) Date de dépôt: 28.06.2005
(51) Int. Cl.: A47G 19/14, A47J 41/00

(54) **RECIPIENT VERSEUR ET APPAREIL D'INFUSION COMPRENANT UN TEL RECIPIENT**
GIESSBEHÄLTER UND BRÜHVORRICHTUNG HIERFÜR
POURER CONTAINER AND BREWING APPLIANCE COMPRISING SAME

(30) Priorité: 26.07.2004 FR 0408242
(43) Date de publication de la demande: 18.04.2007
(73) Titulaire: SEB SA, 69130 Ecully (FR)
(72) Inventeur: GEROULT, Marc, F-72610 Oisseau-le-Petit (FR); JOUATEL, Christian, F-61250 Radon (FR)
(74) Mandataire: Kiehl, Hubert
(86) Numéro de dépôt international: PCT/FR2005/001644
(87) Numéro de publication internationale: WO 2006/021636

(56) Documents cités:
- EP-A- 0 887 038
- DE-A- 19 907 195
- DE-U- 29 612 345
- FR-A- 2 752 712
- US-A- 5 947 343

## Description

La présente invention se rapporte à un récipient verseur, et notamment mais non exclusivement, à un récipient isotherme destiné à une cafetière ou une théière électrique.

Plus particulièrement, l'invention concerne un récipient verseur comprenant :
- un corps comportant un organe verseur et une ouverture supérieure, et définissant une enceinte destinée à contenir un liquide ;
- un couvercle adapté à fermer l'ouverture, et comportant un clapet interne à l'enceinte et un conduit assurant une communication fluidique de l'enceinte vers l'organe verseur à travers un premier et un deuxième débouché, ledit clapet étant mobile entre une position fermée dans laquelle il obture ledit conduit et une position ouverte dans laquelle il autorise une communication entre les premier et deuxième débouchés du couvercle ; et
- une commande de versage reliée audit clapet par un mécanisme d'actionnement adapté à placer ledit clapet en position ouverte lorsque la commande de versage est actionnée, ledit couvercle comprenant en outre un indicateur de versage relié à la commande de versage et mobile entre une position dite de fermeture et une position dite d'ouverture dans laquelle il fait saillie hors du récipient lorsque la commande de versage est actionnée.

Un tel récipient verseur est connu des documents US-A 5 947 343 et DE-U-296 12 345. Etant donné que le clapet lié au couvercle est situé à l'intérieur de l'enceinte, sa position ouverte n'est pas visible par l'utilisateur lorsqu'il veut verser une boisson. C'est pourquoi, le couvercle du récipient est doté d'un indicateur destiné à permettre à l'utilisateur de déduire si l'enceinte est en communication ou non avec l'organe verseur. Toutefois, la compréhension de la fonction de l'indicateur proposé n'est guère suffisamment intuitive pour l'utilisateur afin qu'il sache précisément dans quelle position est le clapet, l'utilisateur hésitant alors à effectuer le mouvement de versage ou au contraire effectuant un mouvement de versage trop brusque. Un tel récipient verseur est donc peu confortable à utiliser.

La présente invention a pour but de pallier cet inconvénient en proposant un récipient verseur dont l'utilisation soit plus intuitive et plus confortable.

A cet effet, la présente invention a pour objet un récipient verseur du type précité, caractérisé en ce que l'indicateur de versage est une plaquette portée par un bras relié à la commande de versage et faisant saillie hors du couvercle au travers du deuxième débouché.

Ainsi, l'utilisateur dispose d'un indicateur agencé au niveau de l'organe verseur, clairement visible lorsqu'il actionne la commande de versage, lui permettant ainsi de déduire plus intuitivement que l'action de cette commande a un effet sur le clapet, et par conséquent, sur la possibilité de verser ou non la boisson contenue dans le récipient. On constate alors que la majorité des utilisateurs effectuent le mouvement de versage de manière plus naturelle.

Dans des modes de réalisation préférés de l'invention, on a recours en outre, à l'une et/ou à l'autre des dispositions suivantes :
- la commande de versage est rappelée élastiquement vers une position inactive dans laquelle l'indicateur de versage vient occuper sa position de fermeture ;
- l'indicateur de versage effectue, depuis sa position de fermeture vers sa position d'ouverture, un mouvement globalement dirigé vers le haut et d'amplitude adaptée pour que l'indicateur de versage fasse saillie au-delà de la face supérieure du couvercle ;
- le mécanisme d'actionnement comprend un premier levier monté basculant par rapport au couvercle autour d'un axe transversal, et s'étendant longitudinalement entre une première extrémité solidaire de la commande de versage et une deuxième extrémité reliée à l'indicateur de versage, et un deuxième levier présentant une première extrémité montée pivotante par rapport au couvercle autour d'un axe et une deuxième extrémité solidaire du clapet, ledit deuxième levier étant sollicité par un organe élastique vers une position dans laquelle le clapet est en position fermée, et le premier levier présente un doigt adapté à venir en appui sur le deuxième levier, lesdits premier et deuxième leviers étant agencés l'un par rapport à l'autre de manière à ce que l'actionnement de la commande de versage amène le clapet en position ouverte et l'indicateur de versage en position d'ouverture ;
- l'axe de basculement du premier levier est positionné longitudinalement à une distance déterminée de la commande de versage de manière à amplifier le mouvement de l'indicateur de versage par rapport au mouvement de la commande de versage ;
- le couvercle comprend en outre un moyen de remplissage monté mobile dans le couvercle et adapté à venir agir sur le deuxième levier de manière à amener le clapet en position ouverte lors de l'actionnement dudit moyen de remplissage, ledit premier levier présentant une ouverture par laquelle passe librement le moyen de remplissage.

La présente invention se rapporte également à un appareil d'infusion, comme par exemple une cafetière ou une théière, comprenant un récipient verseur tel que défini précédemment, dans lequel l'appareil d'infusion comporte un organe d'actionnement pourvu d'une sortie de boisson infusée et destiné à actionner le moyen de remplissage du récipient verseur lorsque celui-ci est correctement positionné par rapport à ladite sortie.

Du fait de la coopération par simple contact entre les premier et deuxième leviers, l'indicateur de versage reste en position de fermeture lorsque le moyen de remplissage est activé. Il n'y a donc pas de risque que cet indicateur vienne en contact avec une partie de l'appareil.

D'autres caractéristiques et avantages de l'invention apparaîtront au cours de la description qui va suivre, donnée à titre d'exemple non limitatif, en référence aux dessins annexés dans lesquels :
- la figure 1 est une vue en coupe verticale d'un récipient verseur isotherme selon l'invention comprenant un couvercle ;
- la figure 2 est une vue éclatée du couvercle représenté à la figure 1;
- la figure 3 est une vue en coupe simplifiée du couvercle représenté à la figure 1 dans laquelle le couvercle est dans une configuration dite fermée ;
- la figure 4 est une vue analogue à la figure 3 dans laquelle le couvercle est dans une configuration dite de versage ;
- la figure 5 est une vue analogue à la figure 3 dans laquelle le couvercle est dans une configuration dite de remplissage.

Sur les différentes figures on a conservé les mêmes références pour désigner des éléments identiques ou similaires.

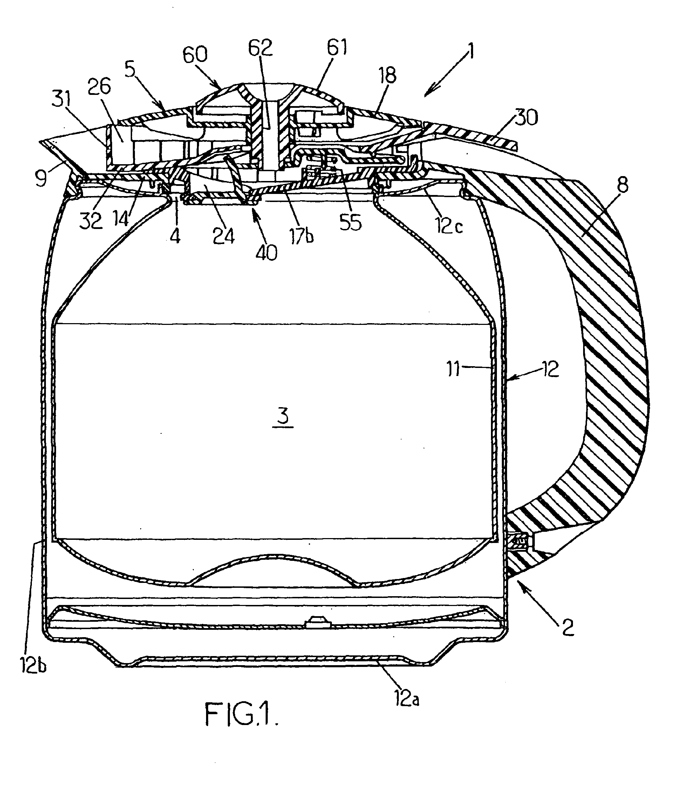

A la figure 1 est représenté un récipient verseur 1. Il s'agit plus particulièrement d'un récipient isotherme destiné à être placé sous la sortie de café d'une cafetière goutte-à-goutte de manière à recueillir le café produit et à maintenir celui-ci au chaud jusqu'à son versage par l'utilisateur. Mais il pourrait s'agir d'un récipient verseur non isolé thermiquement ou qui ne serait pas destiné à être utilisé avec un appareil d'infusion particulier.

Le récipient 1 comprend un corps 2 qui définit une enceinte 3 et présente une ouverture supérieure 4 permettant de remplir l'enceinte 3. Un couvercle amovible 5 est prévu pour fermer l'ouverture 4 du corps.

Le corps 2 comporte en outre une poignée de préhension 8, un organe verseur 9 et des parois délimitant l'enceinte 3 et l'ouverture 4.

L'organe verseur 9 se présente sous forme d'un bec agencé de manière opposée à la poignée 8 sur un pourtour 14 délimitant l'ouverture supérieure 4, mais l'organe verseur pourrait présenter une configuration sensiblement différente. On notera que l'organe verseur 9 ne communique pas directement avec l'enceinte 3, mais est séparé de celle-ci par le pourtour 14 de l'ouverture et le couvercle 5 lorsque celui-ci est en place.

S'agissant d'un récipient isotherme, les parois du corps 2 comprennent une paroi intérieure 11 qui délimite l'enceinte 3 et une paroi extérieure 12 séparée de la paroi intérieure par un espace rempli d'air, ce qui assure une isolation thermique entre le contenu de l'enceinte 3 et l'extérieur du récipient 1. La paroi extérieure 12 comporte une portion 12a définissant le fond du récipient, une portion 12b formant une paroi latérale globalement cylindrique et une portion supérieure 12c qui s'étend jusqu'à la paroi intérieure 11, de sorte que cette dernière est suspendue dans l'espace intérieur défini par la paroi extérieure 12.

Dans le mode de réalisation représenté, les parois intérieure et extérieure (11, 12) sont métalliques, mais il pourrait s'agir de parois en matière plastique isolées l'une de l'autre par de l'air ou tout autre isolant. Le corps pourrait aussi comporter une ampoule isotherme en verre, ou encore une paroi unique en plastique, dans le cas où il ne serait pas nécessaire que le récipient soit isotherme.

De préférence, la poignée 8, le bec verseur 9 et le pourtour 14 de l'ouverture 4 sont réalisés d'une seule pièce en matière plastique qui est fixée par tout moyen approprié à la portion supérieure 12c de la paroi extérieure 12.

Le pourtour 14 de l'ouverture 4 présente une portion annulaire horizontale et une portion cylindrique verticale, non visible sur les figures, qui s'étend à partir du bord extérieur de la portion annulaire. Toutefois, la portion cylindrique verticale présente une échancrure au niveau de l'organe verseur 9, de sorte qu'à cet endroit, la portion annulaire horizontale s'étend jusqu'à l'organe verseur.

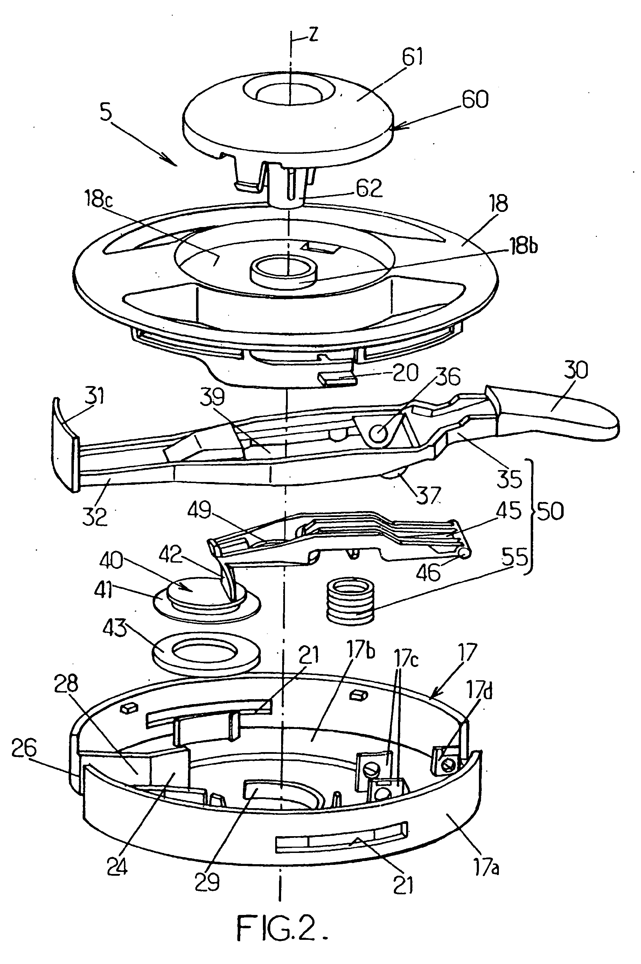

Comme cela est mieux visible à la figure 2, le couvercle 5 comporte une cuvette 17 formée par une paroi latérale circulaire 17a et un fond 17b, ainsi qu'une face supérieure circulaire 18. Dans le mode de réalisation représenté, la cuvette 17 et la face supérieure 18 sont assemblées de manière à être rotatives l'une par rapport à l'autre autour d'un axe central vertical Z. Ceci permet de réaliser un système de verrouillage du couvercle 5 sur le corps 2 à l'aide d'ergots 20 solidaires de la face supérieure 18, qui traversent des fenêtres 21 de la cuvette 17 et viennent coopérer avec des reliefs non représentés formés dans la portion verticale du pourtour 14 de l'ouverture 4, le fond 17b du couvercle reposant sur la portion annulaire horizontale de ce pourtour. La coopération entre le couvercle 5 et le pourtour 14 de l'ouverture assure de préférence une certaine étanchéité entre ces deux pièces.

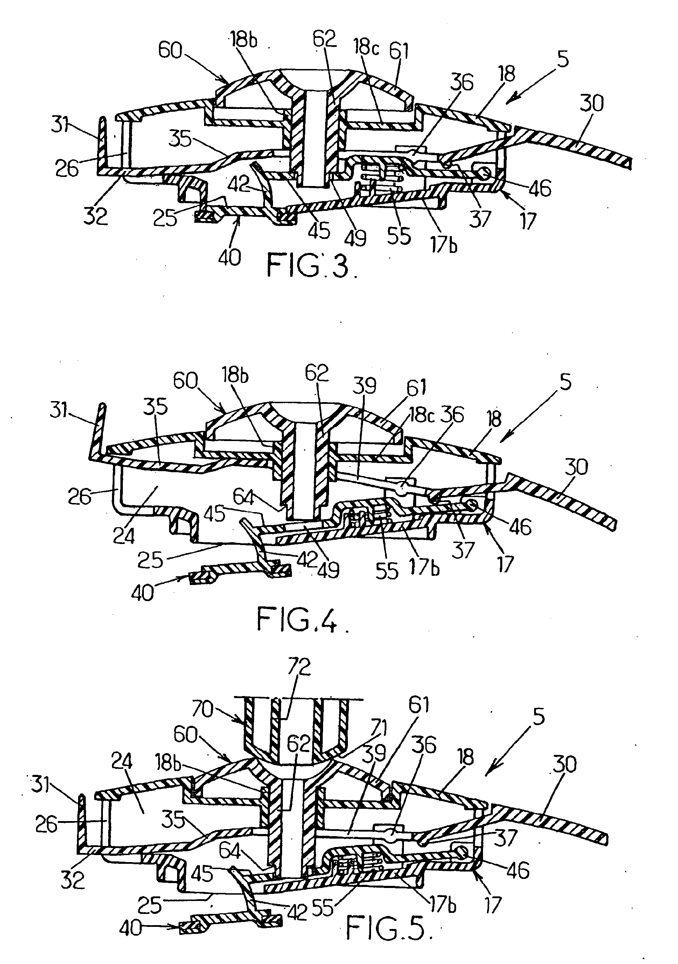

Le couvercle 5 comporte un conduit 24 s'étendant depuis un premier débouché 25, visible aux figures 4 et 5, formé dans le fond 17b et un deuxième débouché 26 formé dans la paroi latérale 17a du couvercle. Le deuxième débouché 26 est agencé par rapport au système de verrouillage du couvercle sur le corps 2, de manière à ce que le deuxième débouché 26 soit en regard de l'organe verseur 9 et que le conduit 24 assure une communication fluidique entre l'enceinte 3 et l'organe verseur 9 en position verrouillée. On notera que dans le mode de réalisation représenté, le conduit 24 est défini par des parois intérieures de la cuvette 17 et par la face supérieure 18 du couvercle, lesdites parois intérieures étant notamment formées, comme représenté à la figure 2, par des ailettes 28 et un rebord en arc de cercle 29 orienté vers le premier débouché 25. Toutefois, il pourrait s'agir d'un conduit présentant une configuration tubulaire sensiblement fermé entre les deux débouchés (25, 26).

Le couvercle 5 comporte également une commande de versage 30 reliée, d'une manière qui sera détaillée ci-après, à un clapet 40 qui est mobile entre une position fermée dans laquelle il obture le débouché 25 et une position ouverte dans laquelle il autorise un écoulement de fluide entre le premier et le deuxième débouché (25, 26) du conduit 24, notamment lorsque la commande de versage 30 est actionnée.

Dans le mode de réalisation représenté, et comme cela est mieux visible à la figure 2, le clapet 40 comprend un disque 41 adapté à recouvrir le débouché 25 du conduit 24, un bras vertical 42 destiné à être déplacé à travers le débouché 25 et une rondelle d'étanchéité 43 permettant d'augmenter l'étanchéité entre le disque 41 et le pourtour du débouché 25. Comme on peut le voir à la figure 3, en position fermée, le clapet 40 est plaqué contre le pourtour extérieur du débouché 25 sous l'effet de la traction exercée vers l'intérieur du couvercle 5 par le bras 42. En position ouverte, représentée aux figures 4 et 5, le clapet 40 est écarté du fond 17b du couvercle, de sorte qu'un fluide peut s'écouler à travers l'espace séparant le clapet 40 du pourtour du débouché 25.

On notera que le clapet 40 est situé dans l'enceinte 3 du récipient, qu'il soit en position ouverte ou fermée, lorsque le couvercle 5 est monté sur le corps 2, c'est-à-dire en position normale d'utilisation. Cette disposition du clapet 40 permet de former avec le fond 17b du couvercle une paroi continue délimitant l'enceinte 3, évitant ainsi les déperditions de chaleur par le couvercle 5. Dans le cas où il ne serait pas nécessaire que le récipient soit isotherme, ou bien dans le cas où le conduit 24 comporterait au moins une portion plus fermée, le clapet pourrait être agencé dans le conduit 24 entre le premier et le deuxième débouché. Mais même dans ce cas, le clapet serait interne à l'enceinte et par conséquent, non visible depuis l'extérieur du récipient dans les conditions normales d'utilisation, de sorte qu'un utilisateur ne pourrait pas déterminer s'il est en position ouverte ou fermée.

Le couvercle 5 comprend en outre un indicateur de versage 31 relié à la commande de versage 30 et mobile entre une position dite de fermeture, représentée à la figure 3, pour laquelle il est agencé dans l'organe verseur 9 lorsque la commande de versage 30 n'est pas activée, et une position dite d'ouverture, représentée à la figure 4, pour laquelle il fait saillie hors du récipient lorsque la commande de versage 30 est actionnée.

L'indicateur de versage 31 se présente sous la forme d'une plaquette en arc de cercle, comme montré à la figure 2, couvrant sensiblement la surface du deuxième débouché 26 et située en regard de celui-ci à l'extérieur du couvercle 5. Cette configuration de l'indicateur de versage 31 suggère à l'utilisateur qu'en position de fermeture, il obture le deuxième débouché 26 du couvercle 5, bien qu'il n'ait pas cette fonction puisque le conduit 24 est obturé par le clapet 40. Par conséquent, l'indicateur de versage 31 pourrait présenter une forme tout à fait différente et être situé différemment par rapport au deuxième débouché 26 du couvercle.

La plaquette 31 est solidaire à son extrémité inférieure d'un bras 32 traversant le deuxième débouché 26, ce qui permet de relier l'indicateur de versage 31 à la commande de versage 30 située de manière diamétralement opposée par rapport au couvercle, par un mécanisme d'actionnement 50 interne au couvercle et par conséquent, non visible de l'utilisateur.

Par contre, en position d'ouverture, représentée à la figure 4, l'indicateur de versage 31 fait saillie hors du récipient, et notamment au-delà de la face supérieure 18 du couvercle 5, ce qui permet à l'utilisateur de constater que l'actionnement de la commande de versage 30 a un effet sur le couvercle 5 qui obture l'ouverture 4, et de déduire intuitivement que lorsque l'indicateur de versage 31 effectue un mouvement globalement dirigé vers le haut, il est possible de verser la boisson contenue dans l'enceinte 3 par l'organe verseur 9.

Dans le mode de réalisation représenté, le mécanisme d'actionnement 50 (figure 2) permettant de relier le clapet 40 et l'indicateur de versage 31 à la commande de versage 30 comprend un premier levier 35, un deuxième levier 45 et un organe élastique 55 qui, comme cela sera détaillé ci-après, permet de ramener élastiquement l'indicateur de versage 31 vers sa position de fermeture lorsque la commande de versage 30 n'est pas activée, afin que l'indicateur de versage ne reste pas bloqué dans sa position dite d'ouverture alors que le clapet 40 est en position fermée.

Le premier levier 35 s'étend longitudinalement entre une première extrémité formant la commande de versage 30 et une deuxième extrémité constituée par le bras 32 supportant l'indicateur de versage 31. Le premier levier 35 présente un axe de pivotement 36 supporté par des paliers 17c formés intégralement avec le fond 17b du couvercle.

L'axe de pivotement 36 est transversal au premier levier 35. On notera également qu'il est positionné longitudinalement plus près de la commande de versage 30 que de l'indicateur de versage 31, de sorte que lorsque ladite commande 30 est actionnée, c'est-à-dire enfoncée par un doigt de l'utilisateur depuis la position représentée aux figures 1 et 3 dans laquelle elle affleure avec la poignée, à la position activée représentée à la figure 4, l'indicateur de versage 31 effectue un déplacement amplifié par rapport à la commande de versage 30, et par conséquent, est bien visible. A titre indicatif, dans le mode de réalisation représenté, un enfoncement de la commande de versage 30 de l'ordre de 2 mm entraîne un déplacement vertical de l'indicateur de versage 31 de l'ordre de 8 mm.

D'autre part, le levier 35 dont l'axe 36 s'étend dans un plan horizontal lorsque le récipient 1 est posé par son fond 12a, est équilibré de part et d'autre de l'axe 36 de manière à ce qu'en dehors de toute sollicitation sur celui-ci, l'indicateur de versage 31 reste en position de fermeture. Cet équilibrage est obtenu par une masse plus élevée de la portion du levier 35 s'étendant depuis l'axe 36 jusqu'à l'indicateur de versage 31, que la portion s'étendant depuis l'axe 36 vers la commande de versage 30, de sorte qu'en position d'équilibre l'indicateur de versage 31 reste en position basse de fermeture.

Le deuxième levier 45 présente une première extrémité constituée par un axe de pivotement 46 parallèle à l'axe de pivotement 36 du premier levier 35, et est solidaire du bras 42 du clapet 40 à sa deuxième extrémité. L'axe de pivotement 46 est supporté par des paliers 17d formés intégralement avec le fond 17b du couvercle 5.

L'organe élastique 55 formé ici par un ressort hélicoïdal de compression, est disposé entre le fond 17b du couvercle et le deuxième levier 45, de sorte qu'il sollicite élastiquement le levier 45 vers une position haute pour laquelle le clapet 40 occupe sa position fermée.

Le premier levier 35 est agencé au-dessus du deuxième levier 45 et leurs axes de pivotement respectifs (36, 46) sont décalés horizontalement, de sorte que la portion du premier levier 35 s'étendant entre l'axe 36 et la commande de versage 30 est située au-dessus d'une partie du deuxième levier 45. Le premier levier 35 présente dans cette portion un doigt 37 adapté à venir en appui sur le deuxième levier 45. Cet appui du doigt 37 permet simultanément, par suite de l'actionnement de la commande de versage 30, d'abaisser le deuxième levier 45, donc de placer le clapet 40 en position ouverte, et de lever le premier levier 35, donc de placer l'indicateur de versage 31 en position d'ouverture, comme cela apparaît à la figure 4. Le mécanisme d'actionnement 50 ainsi réalisé à l'aide de leviers pivotants coopérant par appui est peu onéreux à réaliser, l'indicateur de versage 31 étant formé par un simple prolongement du premier levier 35. De plus, l'encombrement vertical de ce mécanisme d'actionnement 50 est réduit, ce qui permet de réaliser un couvercle 5 de faible hauteur.

Le couvercle 5 comporte, dans le mode de réalisation représenté où le récipient verseur 1 est destiné à une cafetière, un moyen de remplissage 60 présentant un dôme supérieur 61 et une portion tubulaire verticale 62 qui débouche à une extrémité supérieure au centre du dôme 61 et à une extrémité inférieure à l'intérieur du couvercle 5. Le moyen de remplissage 60 est monté coulissant selon l'axe central Z (figure 2) à travers un guide cylindrique 18b de la face supérieure 18 du couvercle et concentriquement à celle-ci. L'amplitude du coulissement du moyen de remplissage 60 est limitée par une cuvette 18c formée dans la face supérieure 18 du couvercle 5, ledit dôme 61 en fin de course venant en butée contre le fond de la cuvette 18c. La portion tubulaire 62 du moyen de remplissage 60 s'étend à l'intérieur du couvercle à travers une ouverture 39 du premier levier 35, de sorte que le moyen de remplissage n'interfère pas avec ce premier levier. Cette portion tubulaire 62 présente à proximité de son extrémité inférieure un épaulement 64 contre lequel vient en appui le pourtour d'une ouverture 49 formée dans le deuxième levier 45 lorsque le clapet est dans sa position fermée., comme on peut le voir à la figure 3.

Lorsque le moyen de remplissage 60 est actionné, c'est-à-dire déplacé vers le bas depuis la position de repos représentée à la figure 3 jusqu'à la position représentée à la figure 5, l'épaulement 64 entraîne vers le bas le deuxième levier 45 et place ainsi celui-ci dans une position basse pour laquelle le clapet 40 est en position ouverte. Un liquide versé au niveau du débouché supérieur de la portion tubulaire 62, qui présente une forme de coupelle, s'écoule alors à travers cette portion tubulaire, sur le fond 17b du couvercle qui est avantageusement incliné et muni de l'aile en arc de cercle 29 (figure 2), puis vers l'enceinte 3 à travers le premier débouché 25 formé dans le couvercle 5.

Le moyen de remplissage 60 ainsi réalisé permet de remplir le récipient isotherme 1 lorsqu'il est utilisé avec une cafetière pourvue d'un organe d'actionnement 70, visible à la figure 5, tout en conservant le couvercle 5 en position sur le corps 2, et par conséquent, en limitant les déperditions de chaleur au cours de la préparation de la boisson.

L'organe d'actionnement 70 de la cafetière présente une forme cylindrique avec une extrémité inférieure 71 bombée adaptée à coopérer par contact glissant avec le dôme 61 du moyen de remplissage 60 lorsque le récipient 1 est mis en place dans la cafetière.

L'organe d'actionnement 70 présente un conduit 72 par lequel s'écoule la boisson infusée et qui débouche au centre de l'extrémité 71 de manière à venir en correspondance avec le débouché supérieur du moyen de remplissage 60.

Lorsque l'utilisateur veut verser le liquide contenu dans l'enceinte 3, il saisit la poignée 8 du récipient et actionne avec le pouce la commande de versage 30, étant entendu que le couvercle 5 est verrouillé sur le corps 2. L'actionnement de la commande de versage 30 entraîne un basculement du premier levier 35 de la position représentée à la figure 3 à la position représentée à la figure 4. L'indicateur de versage 31 effectue alors un mouvement en arc de cercle dirigé vers le haut, de sorte qu'il prend la position saillante et nettement visible représentée à la figure 4. Simultanément, le basculement du premier levier 35 entraîne, par l'intermédiaire du doigt 37, un basculement vers le bas du deuxième levier 45 en comprimant l'organe élastique 55, et ainsi le clapet 40 prend sa position ouverte représentée à la figure 4. L'utilisateur peut déduire visuellement, grâce à la position saillante de l'indicateur de versage 31, que l'enceinte 3 est en communication avec l'organe verseur 9 même s'il ne peut pas constater que le clapet 40 est en position ouverte. L'utilisateur effectue alors un mouvement de versage en inclinant le récipient de manière plus naturelle qu'en l'absence d'indication visuelle.

Lorsque l'utilisateur relâche la pression exercée sur la commande de versage 30, celle-ci revient en position inactive sous l'action de l'organe élastique 55, le clapet 40 et l'indicateur de versage 31 revenant respectivement dans leurs positions fermée et de fermeture représentée à la figure 3.

Pour la préparation de café, l'utilisateur place de manière habituelle le récipient verseur 1 dans la cafetière, c'est-à-dire généralement sur un socle de la cafetière et sous le conduit 72 de sortie de café. Le moyen de remplissage 60 du récipient verseur coopère alors avec l'organe de commande 70 solidaire de la cafetière, ce qui a pour effet d'abaisser le moyen de remplissage 60, et donc d'ouvrir le clapet 40, comme représenté à la figure 5. Le café s'écoulant par le conduit de sortie 72 passe alors par la portion tubulaire 62 du moyen de remplissage 60, le fond 17b du couvercle 5, et le débouché 25 pour remplir l'enceinte 3 du récipient.

On notera que cette opération est automatique, c'est-à-dire qu'elle ne nécessite aucune manipulation spécifique de l'utilisateur. Par conséquent, il n'est pas nécessaire pour cette configuration de remplissage que l'utilisateur soit averti que le premier débouché 25 du couvercle 5 est en communication avec l'enceinte 3 ; au contraire, un tel avertissement pourrait induire une interprétation erronée de la fonction de l'indicateur de versage 31 et même être gênant à cause de l'espace libre nécessaire pour que l'indicateur de versage 31 fasse saillie, comme représenté à la figure 4. Le mode de réalisation représenté permet de remplir cette fonction grâce au découplage possible entre les mouvements de basculement des premier et deuxième leviers (35, 45). En effet, comme on peut le voir à la figure 5, lorsque le moyen de remplissage 60 est actionné, le deuxième levier 45 n'est plus en contact avec le doigt 37 du premier levier 35 qui, du fait de son équilibrage, reste naturellement en position inactive, c'est-à-dire avec l'indicateur de versage 31 en position de fermeture.

Dans le mode de réalisation représenté, le mécanisme d'actionnement 50 est réalisé à l'aide de leviers pivotants, ce qui présente des avantages notamment pour réduire l'encombrement du mécanisme et son coût de fabrication, mais bien entendu, la présente invention n'exclut pas l'utilisation de tout autre type de mécanisme remplissant les fonctions d'ouverture du clapet 40 et de déplacement de l'indicateur de versage 31, comme par exemple des mécanismes présentant des secteurs et des roues dentées coopérant ensemble. De même, la commande de versage 30 et l'ensemble du mécanisme d'actionnement 50 sont liés au couvercle ; toutefois, il est parfaitement envisageable que la commande de versage 30 et/ou une partie du mécanisme d'actionnement 50 soit reliée au corps 2 du récipient.

## Revendications

1. Récipient verseur comprenant :
- un corps (2) comportant un organe verseur (9) et une ouverture supérieure (4), et définissant une enceinte (3) destinée à contenir un liquide ;
- un couvercle (5) adapté à fermer l'ouverture, et comportant un clapet (40) interne à l'enceinte et un conduit (24) assurant une communication fluidique de l'enceinte (3) vers l'organe verseur (9) à travers un premier (25) et un deuxième (26) débouché, ledit clapet (40) étant mobile entre une position fermée dans laquelle il obture ledit conduit et une position ouverte dans laquelle il autorise une communication entre les premier (25) et deuxième (26) débouchés du couvercle ; et
- une commande de versage (30) reliée audit clapet (40) par un mécanisme d'actionnement (50) adapté à placer ledit clapet en position ouverte lorsque la commande de versage est actionnée, ledit couvercle (5) comprenant en outre un indicateur de versage (31) relié à la commande de versage (30) et mobile entre une position dite de fermeture et une position dite d'ouverture dans laquelle il fait saillie hors du récipient lorsque la commande de versage (30) est actionnée, **caractérisé en ce que** l'indicateur de versage (31) est une plaquette portée par un bras (32) relié à la commande de versage (30) et faisant saillie hors du couvercle (5) au travers du deuxième débouché (26).

2. Récipient verseur selon la revendication 1, dans lequel la commande de versage (30) est rappelée élastiquement vers une position inactive dans laquelle l'indicateur de versage (31) vient occuper sa position de fermeture.

3. Récipient verseur selon la revendication 1 ou 2, dans lequel l'indicateur de versage (31) effectue, depuis sa position de fermeture vers sa position d'ouverture, un mouvement globalement dirigé vers le haut et d'amplitude adaptée pour que l'indicateur de versage fasse saillie au-delà de la face supérieure (18) du couvercle (5).

4. Récipient verseur selon l'une quelconque des revendications précédentes, dans lequel le mécanisme d'actionnement (50) comprend un premier levier (35) monté basculant par rapport au couvercle (5) autour d'un axe transversal (36), et s'étendant longitudinalement entre une première extrémité solidaire de la commande de versage (30) et une deuxième extrémité reliée à l'indicateur de versage (31), et un deuxième levier (45) présentant une première extrémité montée pivotante par rapport au couvercle autour d'un axe (46) et une deuxième extrémité solidaire du clapet (40), ledit deuxième levier (45) étant sollicité par un organe élastique (55) vers une position dans laquelle le clapet (40) est en position fermée, et dans lequel le premier levier (35) présente un doigt (37) adapté à venir en appui sur le deuxième levier (45), lesdits premier (35) et deuxième (45) leviers étant agencés l'un par rapport à l'autre de manière à ce que l'actionnement de la commande de versage (30) amène le clapet (40) en position ouverte et l'indicateur de versage (31) en position d'ouverture.

5. Récipient verseur selon la revendication 4, dans lequel l'axe de basculement (36) du premier levier (35) est positionné longitudinalement à une distance déterminée de la commande de versage (30) de manière à amplifier le mouvement de l'indicateur de versage (31) par rapport au mouvement de la commande de versage (30).

6. Récipient verseur selon la revendication 4 ou 5, dans lequel l'axe de basculement (36) du premier levier (35) est situé dans un plan sensiblement horizontal, et dans lequel le premier levier (35) présente un équilibrage par rapport audit axe adapté pour qu'en position d'équilibre l'indicateur de versage (31) soit placé en position de fermeture.

7. Récipient verseur selon l'une quelconque des revendications précédentes, dans lequel le couvercle (5) comprend en outre un moyen de remplissage (60) monté mobile dans le couvercle et adapté à venir agir sur le deuxième levier (45) de manière à amener le clapet (40) en position ouverte lors de l'actionnement dudit moyen de remplissage (60), le premier levier (35) présentant une ouverture (39) par laquelle passe librement ledit moyen de remplissage.

8. Appareil d'infusion comprenant un récipient verseur selon la revendication 7, dans lequel l'appareil d'infusion comporte un organe d'actionnement (70) pourvu d'une sortie (72) de boisson infusée et destiné à actionner le moyen de remplissage (60) du récipient verseur lorsque celui-ci est correctement positionné par rapport à ladite sortie (72).

## Claims

1. Pouring receptacle comprising:
- a body (2) having a pouring member (9) and a top opening (4), and defining a chamber (3) intended to contain a liquid;
- a lid (5) adapted to close the opening, and comprising a flap (40) internal to the chamber and a conduit (24) providing fluid communication from the chamber (3) to the pouring member (9) through first (25) and second (26) outlets, the said flap (40) being able to move between a closed position in which is closes off the said conduit and an open position in which it allows communication between the first (25) and second (26) outlets in the lid; and
- a pouring control (30) connected to the said flap (40) by an actuation mechanism (50) adapted to place the said flap in the open position when the pouring control is actuated, the said lid (5) also comprising a pouring indicator (31) connected to the pouring control (30) and able to move between a so-called closure position and a so-called opening position in which it projects out of the receptacle when the pouring control (30) is actuated, **characterised in that** the pouring indicator (31) is a tab carried by an arm (32) connected to the pouring control (30) and projecting out of the lid (5) through the second outlet (26).

2. Pouring receptacle according to claim 1, in which the pouring control (30) is elastically returned to an inactive position in which the pouring indicator (31) comes to occupy its closure position.

3. Pouring receptacle according to claim 1 or 2, in which the pouring indicator (31) makes, from its closure position towards its opening position, a movement roughly directed upwards and with a suitable amplitude so that the pouring indicator projects beyond the top face (18) of the lid (5).

4. Pouring receptacle according to any one of the preceding claims, in which the actuation mechanism (50) comprises a first lever (35) mounted so as to tilt with respect to the lid (5) about a transverse spindle (36), and extending longitudinally between a first end fixed to the pouring control (30) and a second end connected to the pouring indicator (31), and a second lever (45) having a first end mounted so as to pivot with respect to the lid about a spindle (46) and a second end fixed to the flap (40), the said second lever (45) being urged by an elastic member (55) towards a position in which the flap (40) is in the closed position, and in which the first lever (35) has a finger (37) adapted to come into abutment on the second lever (45), the said first (35) and second (45) levers being arranged with respect to each other so that the actuation of the pouring control (30) brings the flap (40) into the open position and the pouring indicator (31) into the opening position.

5. Pouring receptacle according to claim 4, in which the tilting spindle (36) of the first lever (35) is positioned longitudinally at a given distance from the pouring control (30) so as to amplify the movement of the pouring indicator (31) with respect to the movement of the pouring control (30).

6. Pouring receptacle according to claim 4 or 5, in which the tilting spindle (36) of the first lever (35) is situated in a substantially horizontal plane, and in which the first lever (35) has balancing with respect to the said spindle adapted so that, in the equilibrium position, the pouring indicator (31) is placed in the closure position.

7. Pouring receptacle according to any one of the preceding claims, in which the lid (5) also comprises a filling means (60) mounted so as to be able to move in the lid and adapted to come to act on the second lever (45) so as to bring the flap (40) into the open position when the said filling means (60) is actuated, the first lever (35) having an opening (39) through which the said filling means passes freely.

8. Infusion appliance comprising a pouring receptacle according to claim 7, in which the infusion appliance comprises an actuation member (70) provided with an infused-drink outlet (72) and intended to actuate the filling means (60) of the pouring receptacle when it is correctly positioned with respect to the said outlet (72).

## Patentansprüche

1. Gießbehälter mit:
- einem Körper (2) mit einem Ausgießelement (9) und einer oberen Öffnung (4), der einen Raum (3) zur Aufnahme einer Flüssigkeit definiert;
- einem Deckel (5), der zum Schließen der oberen Öffnung geeignet ist und ein Klappenventil (40) innerhalb des Raums und eine Leitung (24) aufweist, welche eine Fluidverbindung vom Raum (3) zum Ausgießelement (9) durch eine erste Abflussöffnung (25) und eine zweite Abflussöffnung (26) gewährleistet, wobei das Ventil (40) zwischen einer geschlossenen Stellung, in der es die Leitung verschließt, und einer offenen Stellung, in der es eine Verbindung zwischen der ersten Abflussöffnung (25) und zweiten Abflussöffnung (26) des Deckels zulässt, beweglich ist; und
- einer Ausgießsteuerung (30), die mit dem Ventil (40) durch einen Betätigungsmechanismus (50) verbunden ist, der geeignet ist, das Ventil in die offene Stellung zu bringen, wenn die Ausgießsteuerung betätigt wird, wobei der Deckel (5) außerdem einen Ausgießanzeiger (31) aufweist, der mit der Ausgießsteuerung (30) verbunden und zwischen einer so genannten Schließstellung und einer so genannten Öffnungsstellung, in der er aus dem Behälter vorsteht, wenn die Ausgießsteuerung (30) betätigt ist, bewegbar ist, **dadurch gekennzeichnet, dass** der Ausgießanzeiger (31) eine Scheibe ist, die von einem Arm (32) getragen ist, der mit der Ausgießsteuerung (30) verbunden ist, und aus dem Deckel durch die zweite Abflussöffnung (26) vorsteht.

2. Gießbehälter nach Anspruch 1, in welchem die Ausgießsteuerung (30) elastisch zurückgestellt wird in eine inaktive Stellung, in der der Ausgießanzeiger (31) seine Schließstellung einnimmt.

3. Gießbehälter nach Anspruch 1 oder 2, worin der Ausgießanzeiger (31) von seiner Schließstellung zu seiner Öffnungsstellung eine im Ganzen nach oben gerichtete Bewegung von geeigneter Amplitude ausführt, dass der Ausgießanzeiger über die Oberseite (18) des Deckels (5) vorspringt.

4. Gießbehälter nach einem der vorangehenden Ansprüche, worin der Betätigungsmechanismus (50) einen ersten Hebel (35) aufweist, der bezüglich des Deckels (5) um eine Querachse (36) schwenkbar montiert ist und sich längs zwischen einem ersten Ende, das mit der Ausgießsteuerung (30) einstückig ist, und einem zweiten Ende, das mit dem Ausgießanzeiger (31) verbunden ist, erstreckt, und einen zweiten Hebel (45) aufweist, der ein erstes Ende hat, das bezüglich des Deckels um eine Achse (46) schwenkbar montiert ist und ein zweites mit dem Ventil (40) einstückiges Ende hat, wobei der zweite Hebel (45) durch ein elastisches Element (55) in eine Stellung beaufschlagt ist, in der das Ventil (40) in der Schließstellung ist, und wobei der erste Hebel (35) einen Finger (37) aufweist, der dafür eingerichtet ist, dass er gegen den zweiten Hebel (45) drückt, wobei der erste Hebel (35) und zweite Hebel (45) in Bezug aufeinander so ausgebildet sind, dass die Betätigung der Ausgießsteuerung (30) das Ventil (40) in die offene Stellung und den Ausgießanzeiger (31) in die Öffnungsstellung bringt.

5. Gießbehälter nach Anspruch 4, worin die Schwenkachse (36) des ersten Hebels (35) in Längsrichtung in einem bestimmten Abstand von der Ausgießsteuerung (30) angeordnet ist, um die Bewegung des Ausgießanzeigers (31) bezüglich der Bewegung der Ausgießsteuerung (30) zu verstärken.

6. Gießbehälter nach Anspruch 4 oder 5, worin die Schwenkachse (36) des ersten Hebels (35) in einer im Wesentlichen horizontalen Ebene liegt und in der der erste Hebel (35) ein Gleichgewicht in Bezug auf die Achse aufweist, das so ausgebildet ist, dass in der Gleichgewichtsposition der Ausgießanzeiger (31) sich in der Schließstellung befindet.

7. Gießbehälter nach einem der vorangehenden Ansprüche, worin der Deckel (5) außerdem eine Füllvorrichtung (60) aufweist, die im Deckel beweglich montiert und dafür eingerichtet ist, dass sie auf den zweiten Hebel (45) so einwirkt, dass das Ventil (40) bei der Betätigung der Füllvorrichtung (60) in die Öffnungsstellung gebracht wird, wobei der erste Hebel (35) eine Öffnung (39) aufweist, durch welche die Füllvorrichtung frei hindurchtritt.

8. Brühvorrichtung mit einem Gießbehälter nach Anspruch 7, worin die Brühvorrichtung ein Betätigungselement (70) aufweist, das mit einem Auslass (72) für das Brühgetränk versehen ist und dazu bestimmt ist, die Füllvorrichtung (60) des Gießbehälters zu betätigen, wenn dieser bezüglich des Auslasses (72) richtig aufgestellt ist.
